# EUROPÄISCHE PATENTSCHRIFT

(11) **EP 3 535 069 B1**
(45) Veröffentlichungstag und Bekanntmachung des Hinweises auf die Patenterteilung: **01.02.2023**
(21) Anmeldenummer: 17780769.0
(22) Anmeldetag: 12.10.2017
(51) Int. Cl.: B21B 1/46, B22D 11/14, B22D 11/16

(54) **VERFAHREN ZUM BETREIBEN EINER GIESSWALZVERBUNDANLAGE**
METHOD FOR OPERATING A COMBINED CASTING AND ROLLING INSTALLATION
PROCEDE PERMETTANT DE FAIRE FONCTIONNER UNE INSTALLATION MIXTE DE LAMINAGE EN COULEE CONTINUE

(30) Priorität: 07.11.2016 EP 16197488
(43) Veröffentlichungstag der Anmeldung: 11.09.2019
(73) Patentinhaber: Primetals Technologies Austria GmbH, 4031 Linz (AT)
(72) Erfinder: LENGAUER, Thomas, 4616 Weißkirchen a.d. Traun (AT)
(74) Vertreter: Metals@Linz
(86) Internationale Anmeldenummer: PCT/EP2017/076004
(87) Internationale Veröffentlichungsnummer: WO 2018/082883

(56) Entgegenhaltungen:
- EP-A1- 2 524 971
- WO-A1-2004/080628
- WO-A1-2006/042606
- WO-A1-2010/057967
- WO-A2-01/47647
- DE-A1- 19 508 476
- JP-A- H0 195 801
- KR-A- 20140 081 576
- SCHWAHA K ET AL: "Arvedi ESP-Technologie - das erste Duennbrammen-Endlos-Giesswalzverfahren der Welt", BHM BERG- UND HUETTENMAENNISCHE MONATSHEFTE, UNIVERSITAET LEOBEN/AUSTRIA, Bd. 155, Nr. 7, 1. Juli 2010 (2010-07-01), Seiten 330-342, XP009501108, ISSN: 0067-5768

## Beschreibung

Die Erfindung betrifft ein Verfahren zum Betreiben einer Gießwalzverbundanlage. Des Weiteren betrifft die Erfindung eine Gießwalzverbundanlage.

Bei einer Gießwalzverbundanlage handelt es sich um eine Anlage, die eine Gießmaschine sowie mindestens eine Walzstraße umfasst. Mithilfe der Gießmaschine wird ein Gießprodukt erzeugt und mithilfe der Walzstraße wird aus dem Gießprodukt ein Walzprodukt erzeugt.

Anlagenbetreiber von Gießwalzverbundanlagen sind oftmals darum bemüht, Walzprodukte mit einer hohen Walzproduktqualität herzustellen. Eine hohe Walzproduktqualität kann beispielsweise bedeuten, dass das Walzprodukt hinsichtlich seiner Material-/Oberflächeneigenschaften eine hohe Homogenität aufweist und/oder ein geometrisches Profil aufweist, welches einem geometrischen Sollprofil des Walzprodukts entspricht oder lediglich geringfügig von dem geometrischen Sollprofil abweicht.

Die KR 2014 0081576 A offenbart eine Gießwalzverbundanlage, welche eine Gießmaschine zum Erzeugen eines Gießprodukts, eine Grobwalz- und eine Fertigwalzstraße zum Erzeugen eines Walzprodukts aus dem Gießprodukt sowie eine Kontrolleinheit umfasst. Mithilfe einer Messeinheit der Gießwalzverbundanlage werden die Geschwindigkeit sowie die Querschnittsfläche des Walzprodukts gemessen. In Abhängigkeit des aus der Geschwindigkeit und der Querschnittsfläche des Walzprodukts ermittelten Massenflusses des Walzprodukts wird mithilfe der Kontrolleinheit die Gießgeschwindigkeit der Gießmaschine gesteuert.

Ferner offenbart die WO 2004/080628 A1 eine Gießwalzverbundanlage mit einer Gießmaschine zum Erzeugen eines Gießprodukts, einem Walzwerk zum Erzeugen eines Walzprodukts aus dem Gießprodukt und einem Leitsystem. In dieser Gießwalzverbundanlage wird an verschiedenen Stellen in Laufrichtung des Gieß- bzw. Walzprodukts ein Temperatur-Istwert des Gieß- bzw. Walzprodukts gemessen. Insbesondere wird hinter dem Walzwerk ein Temperatur-Istwert des Walzprodukts gemessen. In Abhängigkeit der gemessenen Temperaturwerte wird von dem Leitsystem die Gießgeschwindigkeit der Gießmaschine gesteuert.

Weiterhin offenbart die DE 195 08 476 A1 eine Gießwalzverbundanlage, welche eine mit zwei Gießwalzen ausgestattete Gießmaschine zum Erzeugen eines Gießprodukts, eine Walzanlage zum Erzeugen eines Walzprodukts aus dem Gießprodukt sowie ein Leitsystems umfasst. In dieser Gießwalzverbundanlage wird eine Walzprodukteigenschaft, wie z.B. die Dicke des Walzprodukts, das Dickenprofil des Walzprodukts oder dessen Oberflächenausbildung, gemessen und in Abhängigkeit der gemessenen Walzprodukteigenschaft von dem Leitsystem ein Gießparameter der Gießmaschine, wie z.B. die Gießspiegelhöhe, der Gießwalzspalt oder das Gießwalzenprofil, gesteuert.

Aus der WO 2006/042606 A1 ist ein Verfahren und eine Vorrichtung zum kontinuierlichen Herstellen von Warmband in einer Gießwalzverbundanlage bekannt. Dabei wird ein Band mit weniger als 10mm Dicke in einer Zweiwalzen-Gießanlage gegossen und direkt im Anschluss in einem oder mehreren Gerüsten warmgewalzt. Im Bereich des/der Walzgerüste(s) sind Temperaturmessgeräte 13a, 13b angeordnet, die im Falle des Sensors 13a die Walzeingangstemperatur des Bandes und im Falle des Sensors 13b die Temperatur des gewalzten Bandes am Ende des Walzvorganges ermitteln. Gemäß dem letzten Absatz auf Seite 10 sowie Anspruch 9 messen diese Sensoren die Temperatur an mehreren Stellen quer zur Bandrichtung und damit aber ein T-Profil quer zur Bandrichtung. Die gemessenen Werte werden einer Regeleinrichtung (CPU) zugeführt, die dann die Messwerte auswertet und Stellsignale generiert, die dann z.B. über die Stelleinrichtung 22 an die zwei Gießwalzen übertragen werden. In einer Ausführungsform wird dann eine Kühleinrichtung der Gießwalzen gesteuert, um den Walzballen dieser Walzen zu regeln.

Eine Aufgabe der Erfindung ist es, ein Verfahren zum Betreiben einer Gießwalzverbundanlage anzugeben, welches die Erzeugung eines Walzprodukts mit einer hohen Walzproduktqualität ermöglicht.

Diese Aufgabe wird erfindungsgemäß gelöst durch ein Verfahren mit den Merkmalen des Anspruchs 1.

Eine weitere Aufgabe der Erfindung ist es, eine Gießwalzverbundanlage mit einer Regeleinrichtung bereitzustellen, um die Durchführung des Verfahrens zu ermöglichen.

Diese Aufgabe wird erfindungsgemäß gelöst durch eine Gießwalzverbundanlage mit den Merkmalen des Anspruchs 11. Die Gießwalzverbundanlage ermöglicht die Erzeugung eines Walzprodukts mit einer hohen Walzproduktqualität.

Beim erfindungsgemäßen Verfahren wird mithilfe einer Gießmaschine der Gießwalzverbundanlage ein Gießprodukt erzeugt und mithilfe einer Walzstraße der Gießwalzverbundanlage aus dem Gießprodukt ein Walzprodukt erzeugt. Weiter ist beim erfindungsgemäßen Verfahren vorgesehen, dass die Gießwalzverbundanlage eine Regeleinrichtung mit einer Messeinheit sowie einem Regler aufweist. Ferner ist bei dem Verfahren vorgesehen, dass von der Messeinheit eine Walzprodukteigenschaft erfasst, ein von der Walzprodukteigenschaft abhängiges Messsignal erzeugt und das Messsignal an den Regler übermittelt wird. Außerdem wird vom Regler anhand eines Regelalgorithmus unter Verwendung des Messsignals ein Steuersignal für die Gießmaschine erzeugt und das Steuersignal an die Gießmaschine übermittelt. Des Weiteren wird von der Gießmaschine unter Verwendung des Steuersignals ein Gießparameter eingestellt. Die Walzprodukteigenschaft, die von der Messeinheit erfasst wird, ist ein Temperaturprofil des Walzprodukts in dessen Breitenrichtung und der Gießparameter, der von der Gießmaschine unter Verwendung des Steuersignals eingestellt wird, ist ein Kühlparameter der Gießmaschine.

Die Regeleinrichtung weist eine Messeinheit sowie einen mit einer Gießmaschine verbindbaren Regler auf. Die Messeinheit ist dazu eingerichtet, eine Walzprodukteigenschaft zu erfassen, ein von der Walzprodukteigenschaft abhängiges Messsignal zu erzeugen und das Messsignal an den Regler zu übermitteln. Bei der Regeleinrichtung ist die Messeinheit dazu eingerichtet, als Walzprodukteigenschaft ein Temperaturprofil des Walzprodukts in dessen Breitenrichtung zu erfassen. Außerdem ist der Regler dazu eingerichtet, anhand eines Regelalgorithmus unter Verwendung des Messsignals ein Steuersignal für eine Kühleinrichtung der Gießmaschine zu erzeugen.

Die erfindungsgemäße Gießwalzverbundanlage weist eine Gießmaschine zum Erzeugen eines Gießprodukts und eine Walzstraße zum Erzeugen eines Walzprodukts aus dem Gießprodukt auf. Zudem weist die erfindungsgemäße Gießwalzverbundanlage eine Regeleinrichtung auf, wobei deren Regler mit der Gießmaschine der Gießwalzverbundanlage verbunden ist und wobei die Gießmaschine dazu eingerichtet ist, unter Verwendung des von dem Regler bereitgestellten Steuersignals einen Kühlparameter der Gießmaschine einzustellen.

Vorteilhafte Weiterbildungen sind Gegenstand abhängiger Patentansprüche sowie der nachfolgenden Beschreibung und können sich sowohl auf das Verfahren als auch auf die Regeleinrichtung und die Gießwalzverbundanlage beziehen.

Die Erfindung beruht auf der Erkenntnis, dass diverse Walzprodukteigenschaften eines mithilfe einer Gießwalzverbundanlage erzeugten Walzprodukts eine Funktion von Gießparametern der Gießwalzverbundanlage sind. Das heißt, durch eine Veränderung eines Gießparameters können eine oder mehrere Walzprodukteigenschaften und somit die Walzproduktqualität beeinflusst werden.

Ferner beruht die Erfindung auf der Erkenntnis, dass das Temperaturprofil des Walzprodukts in dessen Breitenrichtung einen entscheidenden Einfluss auf die Material-/Oberflächeneigenschaften des Walzprodukts, insbesondere auf die Homogenität der Material-/Oberflächeneigenschaften, und somit auf die Walzproduktqualität haben kann. Durch das Einstellen des Kühlparameters der Gießmaschine kann ein Temperaturprofil des Gießprodukts und - da aus dem Gießprodukt das Walzprodukt erzeugt wird - letztlich das Temperaturprofil des Walzprodukts beeinflusst werden. Durch das Erfassen des Temperaturprofils des Walzprodukts in dessen Breitenrichtung und die Rückkopplung dieser erfassten Walzprodukteigenschaft an die Gießmaschine (über das Steuersignal) kann erreicht werden, dass sich das Temperaturprofil des Walzprodukts einem Temperaturprofil annähert, bei dem das Walzprodukt die von einem Anlagenbetreiber gewünschten Material-/Oberflächeneigenschaften aufweist.

Die Erfindung ermöglicht es einem Anlagenbetreiber, ohne gro-ßes Prozess-Know-how und ohne großen Geräteaufwand, ein Walzprodukt mit einer hohen Walzproduktqualität zu erzeugen und die Walzproduktqualität dauerhaft auf einem hohen Niveau zu halten.

Bei der Erfindung beruht der Wert, auf den der Gießparameter eingestellt wird, nicht auf einem Erfahrungswert des Anlagenbetreibers, sondern auf dem Steuersignal bzw. dessen Informationsinhalt. Da das Steuersignal unter Verwendung des Messsignals erzeugt wird und das Messsignal von der mittels der Messeinheit erfassten Walzprodukteigenschaft abhängig ist, weist letztlich auch das Steuersignal eine Abhängigkeit von der erfassten Walzprodukteigenschaft auf. Anschaulich gesprochen, sieht die Erfindung eine Regelschleife vor, bei welcher eine Rückführung der erfassten Walzprodukteigenschaft zu der Gießmaschine erfolgt und der Gießparameter automatisiert eingestellt wird. Der Anlagenbetreiber muss dabei nicht wissen, wie die Abhängigkeit zwischen dem Gießparameter und der erfassten Walzprodukteigenschaft aussieht.

Als Gießparameter ist vorliegend ein Betriebsparameter der Gießmaschine zu verstehen. Das Einstellen des Gießparameters umfasst zweckmäßigerweise ein Verändern des Gießparameters. Ferner ist als Kühlparameter ein Betriebsparameter einer Kühleinrichtung der Gießmaschine zu verstehen.

Die Regeleinrichtung kann beispielsweise für eine Neuanlage verwendet werden. Alternativ kann eine bestehende Gießwalzverbundanlage mit der Regeleinrichtung nachgerüstet werden.

Es ist vorteilhaft, wenn die Gießmaschine mit mindestens einer Signalübertragungsschnittstelle ausgestattet ist, über welche die Gießmaschine mit dem Regler verbindbar ist. Insbesondere können die einzelnen Funktionseinheiten der Gießmaschine jeweils eine eigene Signalübertragungsschnittstelle für eine Verbindung mit dem Regler aufweisen. Ferner kann die Gießmaschine mittels einer Kabel- oder Funkverbindung mit dem Regler verbunden sein.

Vorzugsweise liegt der Regelalgorithmus in Form eines maschinenlesbaren Programmcodes vor. Der Regelalgorithmus kann zumindest teilweise auf empirisch ermittelten Abhängigkeiten zwischen einer oder mehreren Walzprodukteigenschaften und einem oder mehreren Gießparametern basieren. Insbesondere kann der Regelalgorithmus auf einer empirisch ermittelten Abhängigkeit des Temperaturprofils des Walzprodukts in dessen Breitenrichtung und besagtem Kühlparameter der Gießmaschine basieren.

Vorteilhafterweise umfasst der Regler einen Datenspeicher sowie einen Prozessor. Der Regelalgorithmus ist zweckmäßigerweise in dem Datenspeicher hinterlegt und vom Prozessor ausführbar. Vorzugsweise ist der Regler mit einer Signalübertragungsschnittstelle ausgestattet, über welche der Regler mit der Gießmaschine verbindbar ist.

Des Weiteren kann die Walzstraße ein oder mehrere Walzgerüste umfassen. Bei dem jeweiligen Walzgerüst kann es sich beispielsweise um ein Duo-Gerüst (Zweiwalzengerüst) oder ein Quarto-Gerüst (Vierwalzengerüst) handeln.

Zweckmäßigerweise umfasst die Gießmaschine eine Kokille. Die Kokille kann insbesondere eine sogenannte Bogenkokille oder eine sogenannte Senkrechtkokille sein. In bevorzugter Weise umfasst die Kokille zwei Schmalseitenplatten, deren Abstand zueinander verstellbar ist, sowie zwei Breitseitenplatten. Vorteilhafterweise ist die Kokille mit einer Primärkühleinrichtung zur Kühlung ihrer Platten ausgestattet. Die Primärkühlung kann beispielsweise ein durch die Platten der Kokille zirkulierendes Kühlmittel, insbesondere Wasser, zum Kühlen der Platten nutzen.

Darüber hinaus umfasst die Gießmaschine zweckmäßigerweise ein Führungssystem zum Führen des Gießprodukts. Ferner ist die Gießmaschine mit einer Sekundärkühleinrichtung zum Kühlen des Gießprodukts ausgestattet. Beispielsweise kann die Sekundärkühleinrichtung mehrere Kühldüsen zum Aufsprühen eines Kühlmittels auf das Gießprodukt aufweisen. Die Sekundärkühleinrichtung kann insbesondere ein Bestandteil des zuvor erwähnten Führungssystems sein.

Die Messeinheit der Regeleinrichtung kann ein oder mehrere Messgeräte umfassen. Insbesondere kann die Messeinheit mehrere unterschiedliche Messgeräte zum Erfassen unterschiedlicher Walzprodukteigenschaften umfassen. Das jeweilige Messgerät der Messeinheit kann beispielsweise ein berührungslos messendes Messgerät sein, welches eine Walzprodukteigenschaft insbesondere durch Detektion von Strahlung erfassen kann.

Bei einer vorteilhaften Ausgestaltung der Erfindung weist die Messeinheit mehrere in Breitenrichtung des Walzprodukts hintereinander angeordnete Sensoren auf. Alternativ oder zusätzlich kann die Messeinheit einen Flächensensor und/oder einen in Breitenrichtung des Walzprodukts ausgerichteten Zeilensensor aufweisen. Bei besagtem Flächen- bzw. Zeilensensor kann es sich z.B. um einen CCD-Sensor handeln.

Zweckmäßigerweise ist die Messeinheit mit einer Signalübertragungsschnittstelle ausgestattet, über welche die Messeinheit mit dem Regler verbindbar ist. Weiter ist es zweckmäßig, wenn die Messeinheit mit dem Regler verbunden ist, insbesondere mittels einer Kabel- oder einer Funkverbindung.

Der besagte Kühlparameter der Gießmaschine kann beispielsweise ein Kühlparameter der Primärkühleinrichtung, insbesondere eine Kühlleistung der Primärkühleinrichtung, sein. In diesem

Fall ist das Steuersignal, das vom Regler erzeugt wird, zweckmäßigerweise ein Steuersignal für die Primärkühleinrichtung.

Bei der Erfindung ist der besagte Kühlparameter ein Kühlparameter der Sekundärkühleinrichtung der Gießmaschine, wie z.B. eine Kühlleistung der Sekundärkühleinrichtung oder ein Kühlleistungsprofil der Sekundärkühleinrichtung. In diesem Fall ist das Steuersignal, das vom Regler erzeugt wird, zweckmäßigerweise ein Steuersignal für die Sekundärkühleinrichtung.

Der Kühlparameter der Gießmaschine kann insbesondere ein Kühlleistungsprofil in Breitenrichtung des Gießprodukts sein. Beispielsweise kann der Kühlparameter derart eingestellt werden, dass das Walzprodukt - bezogen auf dessen Breite - an seinen Rändern stärker oder schwächer gekühlt wird als in seiner Mitte.

Das Einstellen des Kühlparameters kann beispielsweise ein Einstellen der Position/-en einer oder mehrerer Kühldüsen der Sekundärkühleinrichtung der Gießmaschine umfassen. Auf diese Weise kann z.B. eine heiße Zone, welche in einem bestimmten Breitenbereich des Walzprodukts vorliegt, eliminiert werden, indem eine oder mehrere Kühldüsen der Sekundärkühleinrichtung derart positioniert wird/werden, sodass die heiße Zone stärker gekühlt wird.

Zum Einstellen einer gewünschten Kühlleistung der Primär-/ Sekundärkühleinrichtung kann beispielsweise in der jeweiligen Kühleinrichtung ein Kühlmitteldruck und/oder ein Kühlmittelvolumenstrom auf einen geeigneten Wert eingestellt werden.

In bevorzugter Weise ist das mithilfe der Gießmaschine erzeugte Gießprodukt ein Metallstrang, insbesondere ein Stahlstrang. Die Gießmaschine ist also vorzugsweise eine Stranggießmaschine.

Weiter ist es bevorzugt, wenn das mithilfe der Walzstraße erzeugte Walzprodukt ein Metallband, insbesondere ein Stahlband, ist.

Die Gießwalzverbundanlage kann bevorzugt eine endlos operierende Gießwalzverbundanlage sein, in der ein von der Gießmaschine endlos produziertes Gießprodukt ungeschnitten in zumindest einer Walzstraße (z.B. einer Grob- und einer Fertigwalzstraße) zu einem endlos vorliegenden Walzprodukt (auch Endlosprodukt genannt) gewalzt wird. Das Endlosprodukt ist insbesondere ein Endlosmetallband, bevorzugt aus Stahl.

Alternativ kann die Gießwalzverbundanlage eine diskontinuierlich (z.B. im sog. Batch-, Coil-to-Coil- oder Semi-Endlos-Betrieb) operierende Gießwalzverbundanlage sein.

In einer bevorzugten Ausführung der Erfindung wird das Walzprodukt mithilfe eines Warmwalzprozesses erzeugt. Mit anderen Worten, in der Walzstraße wird das Gießprodukt oder ein aus dem Gießprodukt erzeugtes Zwischenprodukt einem Warmwalzprozess unterzogen. Auf diese Weise kann das zu verarbeitende Material mit geringer Kraft umgeformt werden. Als Warmwalzprozess ist ein Walzprozess zu verstehen, bei dem das zu verarbeitende Material eine Temperatur oberhalb seiner Rekristallisationstemperatur aufweist. Zum Erwärmen des Gießprodukts oder eines aus dem Gießprodukt erzeugten Zwischenprodukts kann die Gießwalzverbundanlage zum Beispiel eine Heizeinrichtung, insbesondere eine induktive Heizeinrichtung, aufweisen.

Zweckmäßigerweise wird von der Messeinheit die Walzprodukteigenschaft, bezogen auf eine Laufrichtung des Walzprodukts in der Gießwalzverbundanlage, hinter der Walzstraße erfasst.

Das Walzprodukt kann mithilfe der Walzstraße direkt aus dem Gießprodukt erzeugt werden. Das heißt, das Gießprodukt kann nach dessen Herstellung der Walzstraße zur Durchführung eines Walzprozesses zugeführt werden, ohne zuvor einem Umformverfahren unterzogen zu werden. In diesem Fall kann die Walzstraße insbesondere eine Fertigwalzstraße sein.

Alternativ kann aus dem Gießprodukt zunächst durch ein Umformverfahren, beispielsweise durch einen Walzprozess, ein Zwischenprodukt, insbesondere ein Grobwalzprodukt, erzeugt werden. Das Zwischenprodukt kann dann der Walzstraße zur Durchführung des Walzprozesses zugeführt werden.

In einer vorteilhaften Ausgestaltung der Erfindung ist die Walzstraße eine Grobwalzstraße, auch Vor- oder Zwischenwalzstraße genannt. Zweckmäßigerweise erzeugt die Walzstraße in diesem Fall aus dem Gießprodukt ein Grobwalzprodukt. Darüber hinaus kann die Gießwalzverbundanlage eine weitere Walzstra-ße, insbesondere eine Fertigwalzstraße, aufweisen. Die weitere Walzstraße kann insbesondere aus dem Grobwalzprodukt ein Fertigwalzprodukt erzeugen. Weiter kann von der Messeinheit die Walzprodukteigenschaft zwischen diesen beiden Walzstraßen erfasst werden.

Vorzugsweise handelt es sich bei der erstgenannten Walzstraße und/oder bei der weiteren Walzstraße jeweils um eine Warmwalzstraße.

Bei einer vorteilhaften Weiterbildung der Erfindung ist vorgesehen, dass dem Regler ein Sollwert der Walzprodukteigenschaft zugeführt wird. Das vom Regler erzeugte Steuersignal ist vorzugsweise von einer Abweichung zwischen dem Sollwert der Walzprodukteigenschaft und deren Istwert abhängig. Zweckmäßigerweise wird der Istwert der Walzprodukteigenschaft vom Regler unter Verwendung des Messsignals ermittelt.

Vorteilhafterweise beschreibt der Regelalgorithmus eine Strategie, wie der Gießparameter in Abhängigkeit der Abweichung zwischen dem Sollwert und dem Istwert der Walzprodukteigenschaft einzustellen ist - mit dem Ziel, den Istwert der Walzprodukteigenschaft an deren Sollwert anzunähern. Mit anderen Worten, mithilfe der Regeleinrichtung wird der Gießparameter vorteilhafterweise derart eingestellt, dass die Walzprodukteigenschaft ihrem Sollwert entspricht.

Gemäß der Erfindung ist vorgesehen, dass die Gießwalzverbundanlage eine Bedieneinheit, zum Beispiel einen Computer, aufweist. Die Bedieneinheit ist mit dem Regler verbunden, insbesondere mittels einer Kabel- oder einer Funkverbindung. Mittels der Bedieneinheit ist dem Regler ein Sollwert der Walzprodukteigenschaft vorgebbar.

Bei einer vorteilhaften Weiterbildung der Erfindung ist vorgesehen, dass die Sekundärkühleinrichtung der Gießmaschine eine oder mehrere positionsverstellbar gelagerte Kühldüsen zum Aufspritzen eines Kühlmittels auf das Gießprodukt aufweist. Weiter ist es vorteilhaft, wenn die Sekundärkühleinrichtung mindestens eine Verstelleinrichtung zur Positionsverstellung dieser Kühldüse/-n aufweist.

Die Sekundärkühleinrichtung ist vorteilhafterweise mit einem oder mehreren Kühldüsenhaltern ausgestattet. An dem jeweiligen Kühldüsenhalter ist zweckmäßigerweise mindestens eine der Kühldüsen der Sekundärkühleinrichtung befestigt.

Vorzugsweise umfasst die Verstelleinrichtung ein Stellglied, insbesondere ein axial verschiebbares Stellglied. Das Stellglied ist zweckmäßigerweise mit einem der Kühldüsenhalter verbunden. Ferner kann die Verstelleinrichtung einen hydraulisch oder pneumatisch betätigbaren Druckmittelzylinder zum Verschieben des Stellglieds aufweisen.

Insbesondere kann die Sekundärkühleinrichtung derart ausgebildet sein, dass bei einer axialen Verstellbewegung des Stellglieds der Verstelleinrichtung eine zu dieser Verstellbewegung parallele Verstellbewegung des mit dem Stellglied verbundenen Kühldüsenhalters erfolgt. Durch eine Verstellbewegung des Kühldüsenhalters ändert/ändern die am Kühldüsenhalter befestigte/-n Kühldüse/-n vorzugsweise ihren Abstand zum Gießprodukt.

Falls die Sekundärkühleinrichtung mehrere positionsverstellbar gelagerte Kühldüsen aufweist, umfasst die Sekundärkühleinrichtung vorzugsweise mehrere solche Verstelleinrichtungen. Insbesondere kann die Sekundärkühleinrichtung für jede Kühldüse eine eigene Verstelleinrichtung aufweisen. Auf diese Weise kann erreicht werden, dass die Kühldüsen individuell verstellbar sind. Alternativ kann die Sekundärkühleinrichtung für mehrere der Kühldüsen eine gemeinsame Verstelleinrichtung aufweisen, sodass mehrere der Kühldüsen durch dieselbe Verstelleinrichtung verstellbar sein können.

Anstelle des Temperaturprofils des Walzprodukts in dessen Breitenrichtung kann die Walzprodukteigenschaft, die von der Messeinheit erfasst wird, beispielsweise eine geometrische Eigenschaft des Walzprodukts oder eine Materialeigenschaft des Walzprodukts sein. In solch einem Fall ist die Messeinheit zweckmäßigerweise dazu eingerichtet, als Walzprodukteigenschaft die geometrische Eigenschaft des Walzprodukts oder die Materialeigenschaft des Walzprodukts zu erfassen.

Die geometrische Eigenschaft kann z.B. die Breite des Walzprodukts, ein geometrisches Profil des Walzprodukts, insbesondere ein Dickenprofil über die Breite des Walzprodukts, oder eine Planheit des Walzprodukts, insbesondere in dessen Längsrichtung, sein. Die Materialeigenschaft kann insbesondere eine Oberflächeneigenschaft des Walzprodukts sein. Zum Beispiel kann es sich bei der Materialeigenschaft um eine Verteilung von Zunderfehlern (Zunderfehlerprofil), insbesondere in Breitenrichtung des Walzprodukts, oder eine Gefügeverteilung, insbesondere in Breitenrichtung des Walzprodukts, handeln.

Grundsätzlich können von der Messeinheit mehrere unterschiedliche Walzprodukteigenschaften, insbesondere mehrere der zuvor erwähnten Walzprodukteigenschaften, erfasst werden. Die Messeinheit kann beispielsweise zu jeder der erfassten Walzprodukteigenschaften ein Messsignal erzeugen, welches von der jeweiligen Walzprodukteigenschaft abhängig ist, und das jeweilige Messsignal an den Regler übermitteln.

Anstelle des Kühlparameters kann der Gießparameter, der von der Gießmaschine unter Verwendung des Steuersignals eingestellt wird, zum Beispiel eine Gießbreite oder eine Gießgeschwindigkeit der Gießmaschine sein. Als Gießbreite der Gießmaschine ist ein Abstand zwischen den Schmalseitenplatten der Kokille an ihrem Ausgang zu verstehen.

Durch ein Verstellen der Gießbreite kann die Breite des Walzprodukts verändert werden. Insbesondere kann die Gießbreite derart eingestellt werden, dass die Breite des Walzprodukts in solchem Maße seiner Sollbreite entspricht, dass ein Besäumschnitt des Walzprodukts entfallen kann oder nur geringe Ausbringungsverluste auftreten. Ein Verstellen der Gießgeschwindigkeit der Gießmaschine wiederum kann beispielsweise ein geometrisches Profil, ein Temperaturprofil und/oder eine Material-/Oberflächeneigenschaft des Walzprodukts verändern.

Weiter kann vorgesehen sein, dass von der Gießmaschine mehrere unterschiedliche Gießparameter, insbesondere mehrere der zuvor erwähnten Gießparameter, eingestellt werden. Für jeden einzustellenden Gießparameter kann der Regler ein eigenes Steuersignal für die Gießmaschine erzeugen und dieses an die Gießmaschine übermitteln.

Die bisher gegebene Beschreibung vorteilhafter Ausgestaltungen der Erfindung enthält zahlreiche Merkmale, die in den einzelnen abhängigen Patentansprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren, der erfindungsgemäßen Regeleinrichtung und der erfindungsgemäßen Gießwalzverbundanlage kombinierbar. Ferner können Verfahrensmerkmale auch als Eigenschaft der entsprechenden Vorrichtungseinheit gesehen werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung des Ausführungsbeispiels der Erfindung, das im Zusammenhang mit den Zeichnungen näher erläutert wird. Das Ausführungsbeispiel dient der Erläuterung der Erfindung und beschränkt die Erfindung nicht auf die darin angegebenen Kombinationen von Merkmalen, auch nicht in Bezug auf funktionale Merkmale. Außerdem können dazu geeignete Merkmale des Ausführungsbeispiels auch explizit isoliert betrachtet und mit einem beliebigen der Ansprüche kombiniert werden.

Es zeigen:
- FIG 1: eine Gießwalzverbundanlage in einer schematischen Darstellung;
- FIG 2: eine Schnittdarstellung der Gießwalzverbundanlage aus FIG 1.

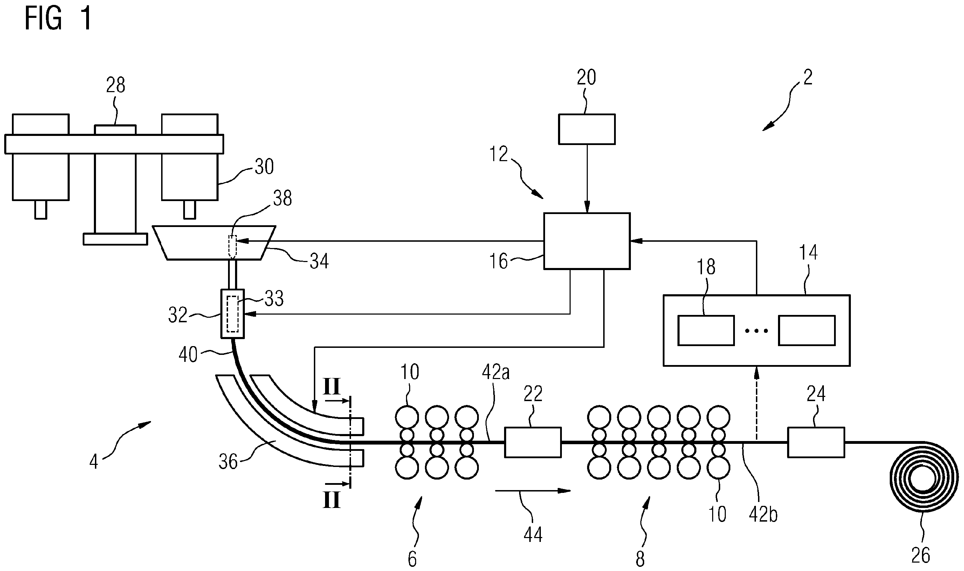

FIG 1 zeigt schematisch eine Gießwalzverbundanlage 2 zur Herstellung von dünnem Endlosmetallband.

Die Gießwalzverbundanlage 2 umfasst eine Gießmaschine 4, eine erste Walzstraße 6 sowie eine zweite Walzstraße 8. Bei der ersten Walzstraße 6 handelt es sich um eine Grobwalzstraße mit drei Walzgerüsten 10 und bei der zweiten Walzstraße 8 handelt es sich um eine Fertigwalzstraße mit fünf Walzgerüsten 10, wobei die jeweilige Walzstraße 6, 8 grundsätzlich eine andere Anzahl von Walzgerüsten 10 aufweisen kann.

Des Weiteren umfasst die Gießwalzverbundanlage 2 eine Regeleinrichtung 12 mit einer Messeinheit 14 und einem mit der Messeinheit 14 verbundenen Regler 16. Die Messeinheit 14 umfasst mehrere Messgeräte 18 zum Erfassen unterschiedlicher Walzprodukteigenschaften. Bei dem jeweiligen Messgerät 18 kann es sich insbesondere um ein berührungslos messendes Messgerät handeln.

Außerdem weist die Gießwalzverbundanlage 2 eine mit dem Regler 16 verbundene Bedieneinheit 20 und eine zwischen den beiden Walzstraßen 6, 8 angeordnete induktive Heizeinrichtung 22 auf. Ferner ist die Gießwalzverbundanlage 2 mit einer Kühleinrichtung 24, beispielsweise einer Laminar-Kühlstrecke, sowie einer Aufwickeleinrichtung 26 ausgestattet.

Die Gießmaschine 4 der Gießwalzverbundanlage 2 ist eine Stranggießmaschine und umfasst einen Pfannendrehturm 28, in den zwei Gießpfannen 30 einsetzbar sind, sowie eine Kokille 32. Die Kokille 32 der Gießmaschine 4 verfügt über zwei Schmalseitenplatten, deren Abstand zueinander verstellbar ist, zwei Breitseitenplatten und eine Primärkühleinrichtung 33 zum Kühlen der Platten, wobei die Platten der Kokille 32 einer besseren Übersichtlichkeit halber figürlich nicht dargestellt sind.

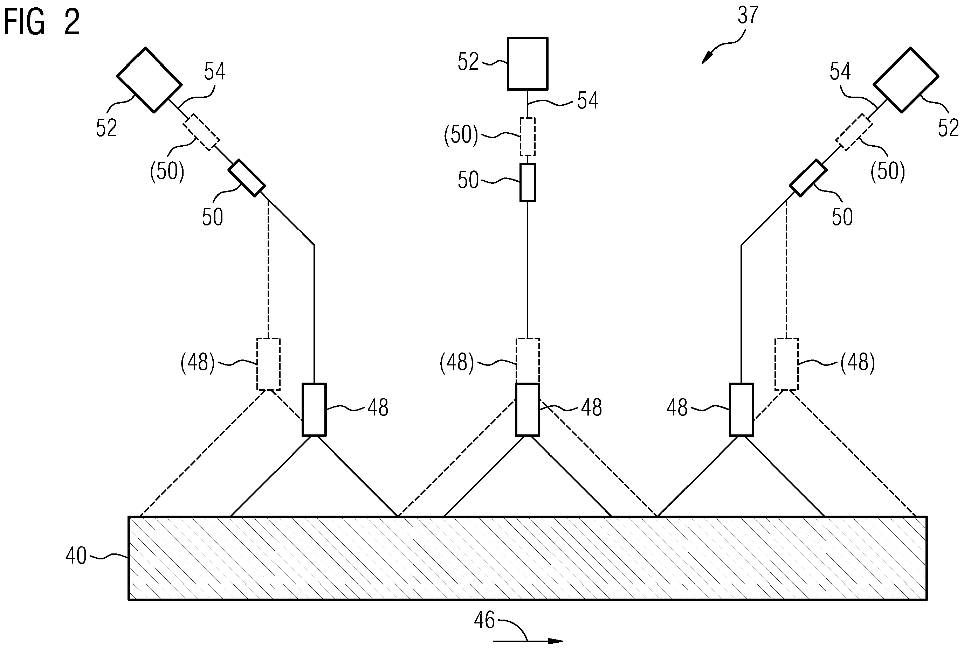

Darüber hinaus umfasst die Gießmaschine 4 einen Verteiler 34 zum Aufnehmen einer Metallschmelze aus den Gießpfannen 30 und zum Weiterleiten der Metallschmelze zu der Kokille 32. Weiterhin verfügt die Gießmaschine 4 über ein Führungssystem 36 mit einer Sekundärkühleinrichtung 37 (vgl. FIG 2) und mehreren Führungsrollen, wobei die Führungsrollen und die Sekundärkühleinrichtung 37 in FIG 1 einer besseren Übersichtlichkeit halber nicht dargestellt sind. Außerdem weist die Gießmaschine 4 einen Stopfen 38 auf, mittels welchem ein Zufluss der Metallschmelze zu der Kokille 32 steuerbar ist. Zusätzlich zu den zuvor erwähnten Anlagenelementen kann die Gießwalzverbundanlage 2 ein oder mehrere figürlich nicht dargestellte Anlagenelemente, wie z.B. eine vor der Aufwickeleinrichtung 26 angeordnete Trennvorrichtung zum Durchtrennen eines Metallbandes, aufweisen.

Der Regler 16 ist mit der Gießmaschine 4, insbesondere mit der Kokille 32, dem Führungssystem 36 und dem Stopfen 38 der Gießmaschine 4, verbunden. Weiterhin kann der Regler 16 eine Kühlleistung bzw. eine Kühlleistungsverteilung der Sekundärkühleinrichtung 37, eine Kühlleistung bzw. eine Kühlleistungsverteilung der Primärkühleinrichtung 33, eine Stellung des Stopfens 38 sowie den Abstand, den die Schmalseitenplatten der Kokille 32 zueinander aufweisen, steuern.

Mithilfe der Gießmaschine 4 wird aus der Metallschmelze ein Gießprodukt 40 erzeugt. Im vorliegenden Beispiel handelt es sich bei dem Gießprodukt 40 um einen Metallstrang. Da der Herstellungsprozess des Gießproduktes 40 dem Fachmann grundsätzlich bekannt ist, wird auf den Herstellungsprozess des Gießprodukts 40 nicht näher eingegangen.

Mithilfe der beiden Walzstraßen 6, 8 wird aus dem Gießprodukt 40 ein Walzprodukt, im vorliegenden Ausführungsbeispiel ein Metallband, erzeugt.

Das aus der Gießmaschine 4 austretende Gießprodukt 40 wird zunächst der ersten Walzstraße 6, also der Grobwalzstraße, zugeführt. Mittels der ersten Walzstraße 6 wird aus dem Gießprodukt 40 ein Grobwalzprodukt 42a erzeugt, wobei das Gießprodukt 40 in der ersten Walzstraße 6 einem Warmwalzprozess unterzogen wird.

Das aus der ersten Walzstraße 6 austretende Grobwalzprodukt 42a wird der zweiten Walzstraße 8, also der Fertigwalzstraße, zugeführt. Gegebenenfalls wird das Grobwalzprodukt 42a zuvor mithilfe der Heizeinrichtung 22 aufgeheizt, um eine Temperatur des Grobwalzprodukts 42a oberhalb seiner Rekristallisationstemperatur zu halten. Mittels der zweiten Walzstraße 8 wird aus dem Grobwalzprodukt 42a ein Fertigwalzprodukt 42b erzeugt, wobei das Grobwalzprodukt 42a in der zweiten Walzstraße 8 einem Warmwalzprozess unterzogen wird.

Von der Messeinheit 14 wird in Breitenrichtung des Fertigwalzprodukts 42b ein Temperaturprofil des Fertigwalzprodukts 42b erfasst. Mit anderen Worten, von der Messeinheit 14 wird eine Mehrzahl von Temperaturwerten des Fertigwalzprodukts 42b in dessen Breitenrichtung erfasst. Die Messeinheit 14 erzeugt ein von dieser Walzprodukteigenschaft abhängiges Messsignal und übermittelt das Messsignal an den Regler 16.

Von dem Regler 16 wird unter Verwendung des Messsignals anhand eines Regelalgorithmus ein Steuersignal für die Sekundärkühleinrichtung 37 des Führungssystems 36 erzeugt und an die Sekundärkühleinrichtung 37 übermittelt. Dieses Steuersignal dient zum Einstellen eines Kühlleistungsprofils in Breitenrichtung des Fertigwalzprodukts 42b.

Zusätzlich zu dem Temperaturprofil des Fertigwalzprodukts 42b in dessen Breitenrichtung kann die Messeinheit 14 eine oder mehrere weitere Walzprodukteigenschaften des Fertigwalzprodukts 42b erfassen. Eine solche weitere Walzprodukteigenschaft kann die Breite des Fertigwalzprodukts 42b, dessen Planheit, dessen Dickenprofil über die Breite oder eine Oberflächeneigenschaft des Fertigwalzprodukts 42b, wie zum Beispiel eine Verteilung von Zunderfehlern in Breitenrichtung des Fertigwalzprodukts 42b, sein. Alternativ oder zusätzlich können von der Messeinheit 14 eine oder mehrere Walzprodukteigenschaften des Grobwalzprodukts 42a erfasst werden. Das heißt, die jeweilige Walzprodukteigenschaft kann, bezogen auf eine Laufrichtung 44 des Walzprodukts in der Gießwalzverbundanlage 2, hinter der zweiten Walzstraße 8 und/oder zwischen den beiden Walzstraßen 6, 8 erfasst werden.

Zu jeder weiteren Walzprodukteigenschaft, die von der Messeinheit 14 erfasst wird, erzeugt die Messeinheit 14 ein von der jeweiligen weiteren Walzprodukteigenschaft abhängiges weiteres Messsignal und übermittelt dieses an den Regler 16.

Vom Regler 16 werden anhand des zuvor erwähnten Regelalgorithmus unter Verwendung des weiteren Messsignals bzw. der weiteren Messsignale ein oder mehrere Steuersignale zum Einstellen eines oder mehrerer Gießparameter erzeugt. Das jeweilige Steuersignal wird vom Regler 16 an die Gießmaschine 4 übermittelt.

Das jeweilige vom Regler 16 erzeugte Steuersignal ist von einer Abweichung zwischen einem Sollwert einer Walzprodukteigenschaft und deren Istwert abhängig, wobei der Sollwert der jeweiligen Walzprodukteigenschaft dem Regler 16 über die Bedieneinheit 20 vorgegeben wird und der Istwert der jeweiligen Walzprodukteigenschaft vom Regler 16 unter Verwendung des zugehörigen Messsignals ermittelt wird.

Zusätzlich zu dem Kühlleistungsprofil der Sekundärkühleinrichtung 37 in Breitenrichtung des Fertigwalzprodukts 42b kann die Gießmaschine 4 unter Verwendung des Steuersignals bzw. der Steuersignale einen oder mehrere andere Gießparameter, wie zum Beispiel eine Gießbreite, eine Gießgeschwindigkeit und/oder die Kühlleistung bzw. Kühlleistungsverteilung der Primärkühleinrichtung 33 einstellen. Der bzw. die Gießparameter wird/werden von der Gießmaschine 4 derart eingestellt, dass der Istwert der jeweiligen Walzprodukteigenschaft ihrem Sollwert angenähert wird.

Das aus der zweiten Walzstraße 8 austretende Fertigwalzprodukt 42b wird mithilfe der Kühleinrichtung 24 gekühlt und von der Aufwickeleinrichtung 26 aufgewickelt.

FIG 2 zeigt einen Schnitt durch die Gießwalzverbundanlage 2, genauer gesagt durch deren Führungssystems 36, entlang der Schnittebene II-II aus FIG 1.

In FIG 2 ist das Gießprodukt 40 im Querschnitt abgebildet. Dessen Breitenrichtung 46, die zugleich der Breitenrichtung des Grob- und des Fertigwalzprodukts 42a, 42b entspricht, ist in Form eines Pfeils dargestellt.

Weiter ist in FIG 2 ein Teil der Sekundärkühleinrichtung 37 des Führungssystems 36 (aus FIG 1) abgebildet. Führungsrollen des Führungssystems 36 hingegen sind einer besseren Übersichtlichkeit halber nicht dargestellt.

Die Sekundärkühleinrichtung 37 umfasst mehrere Kühldüsen 48 zum Aufspritzen eines Kühlmittels auf das Gießprodukt 40, von denen in FIG 2 exemplarisch drei in einer Ebene angeordnete Kühldüsen 48 abgebildet sind, die in Breitenrichtung 46 des Gießprodukts 40 zueinander versetzt angeordnet sind.

Im vorliegenden Ausführungsbeispiel weist die Sekundärkühleinrichtung 37 für jede der Kühldüsen 48 einen eigenen Kühldüsenhalter 50 und eine eigene Verstelleinrichtung 52 mit einem axial verschiebbaren Stellglied 54 (beispielweise einem Kolben) auf. Die jeweilige Kühldüse 48 ist am zugehörigen Kühldüsenhalter 50 befestigt, welcher wiederum mit dem Stellglied 54 der zugehörigen Verstelleinrichtung 52 verbunden ist. Zudem sind die Verstelleinrichtungen 52 jeweils an einem figürlich nicht dargestellten Gerüstrahmen des Führungssystems 36 befestigt.

Die Sekundärkühleinrichtung 37 ist derart ausgebildet, dass bei einer axialen Verstellbewegung des Stellglieds 54 einer Verstelleinrichtung 52 eine zu dieser Verstellbewegung parallele Verstellbewegung des zugehörigen Kühldüsenhalters 50 und der an dem Kühldüsenhalter 50 befestigten Kühldüse 48 erfolgt. Die Verstellbewegung einer Kühldüse 48 führt dazu, dass diese Kühldüse 48 ihren Abstand zu dem Gießprodukt 40 sowie zu den anderen in derselben Ebene angeordneten Kühldüsen 48 verändert.

Zur Veranschaulichung einer solchen Verstellbewegung sind die Kühldüsen 48 und die zugehörigen Kühldüsenhalter 50 in FIG 2 jeweils in einer dem Gießprodukt 40 näheren ersten Position (Darstellung mit durchgezogener Linie) und in einer dem Gießprodukt 40 entfernteren zweiten Position (Darstellung mit gestrichelter Linie) abgebildet.

Die in FIG 2 abgebildeten Kühldüsen 48 sind exemplarisch oberhalb des Gießprodukts 40 angeordnet. Auch unterhalb des Gießprodukts 40 kann die Sekundärkühleinrichtung 37 solche Kühldüsen sowie diesen Kühldüsen zugeordnete Kühldüsenhalter und Verstelleinrichtungen aufweisen. Des Weiteren umfasst die Sekundärkühleinrichtung 37 vor und hinter der Zeichenebene der FIG 2 weitere solche in Breitenrichtung 46 des Gießprodukts 40 nebeneinander angeordnete Kühldüsen sowie diesen Kühldüsen zugeordnete Kühldüsenhalter und Verstelleinrichtungen.

Das zuvor erwähnte Einstellen des Kühlleistungsprofils der Sekundärkühleinrichtung 37 in Breitenrichtung des Fertigwalzprodukts 42b kann ein Einstellen der Position/-en einer oder mehrerer Kühldüsen 48 relativ zu dem Gießprodukt 40 umfassen. Um das Kühlleistungsprofil der Sekundärkühleinrichtung 37 in Breitenrichtung des Fertigwalzprodukts 42b zu verändern, kann/können also insbesondere die Position/-en einer oder mehrerer Kühldüsen 48 verändert werden. Alternativ oder zusätzlich können bei einer oder mehreren Kühldüsen 48 der Volumenstrom des aus der jeweiligen Kühldüsen 48 austretenden Kühlmittels verändert werden.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können hieraus abgeleitet werden, ohne den Schutzumfang der Erfindung, wie von Ansprüche 1 bis 12 definiert, zu verlassen.

### Bezugszeichenliste

- 2: Gießwalzverbundanlage
- 4: Gießmaschine
- 6: Walzstraße
- 8: Walzstraße
- 10: Walzgerüst
- 12: Regeleinrichtung
- 14: Messeinheit
- 16: Regler
- 18: Messgerät
- 20: Bedieneinheit
- 22: Heizeinrichtung
- 24: Kühleinrichtung
- 26: Aufwickeleinrichtung
- 28: Pfannendrehturm
- 30: Gießpfanne
- 32: Kokille
- 33: Primärkühleinrichtung
- 34: Verteiler
- 36: Führungssystem
- 37: Sekundärkühleinrichtung
- 38: Stopfen
- 40: Gießprodukt
- 42a: Grobwalzprodukt
- 42b: Fertigwalzprodukt
- 44: Laufrichtung
- 46: Breitenrichtung
- 48: Kühldüse
- 50: Kühldüsenhalter
- 52: Verstelleinrichtung
- 54: Stellglied

## Patentansprüche

1. Verfahren zum Betreiben einer Gießwalzverbundanlage (2), bei dem
- mithilfe einer Gießmaschine (4) der Gießwalzverbundanlage (2) ein Gießprodukt (40) erzeugt wird und
- mithilfe einer Walzstraße (6, 8) der Gießwalzverbundanlage (2) aus dem Gießprodukt (40) ein Walzprodukt (42a, 42b) erzeugt wird, wobei
- die Gießwalzverbundanlage (2) eine Regeleinrichtung (12) mit einer Messeinheit (14) sowie einem Regler (16) aufweist,
- von der Messeinheit (14) eine Walzprodukteigenschaft erfasst, ein von der Walzprodukteigenschaft abhängiges Messsignal erzeugt und das Messsignal an den Regler (16) übermittelt wird,
- vom Regler (16) anhand eines Regelalgorithmus unter Verwendung des Messsignals ein Steuersignal für die Gießmaschine (4) erzeugt und das Steuersignal an die Gießmaschine (4) übermittelt wird und
- von der Gießmaschine (4) unter Verwendung des Steuersignals ein Gießparameter eingestellt wird,
- wobei die Walzprodukteigenschaft, die von der Messeinheit (14) erfasst wird, ein Temperaturprofil des Walzprodukts (42a, 42b) in dessen Breitenrichtung ist,
- wobei der Gießparameter, der von der Gießmaschine (4) unter Verwendung des Steuersignals eingestellt wird, ein Kühlparameter der Gießmaschine (4) ist, und
- wobei der besagte Kühlparameter ein Kühlparameter einer Sekundärkühleinrichtung (37) der Gießmaschine (4) ist.

2. Verfahren nach Anspruch 1,
**dadurch gekennzeichnet, dass** der Kühlparameter der Gießmaschine (4) ein Kühlleistungsprofil in Breitenrichtung (46) des Gießprodukts (40) ist.

3. Verfahren nach einem der vorhergehenden Ansprüche,
**dadurch gekennzeichnet, dass** das Einstellen des Kühlparameters ein Einstellen der Position/-en einer oder mehrerer Kühldüsen (48) einer Sekundärkühleinrichtung (37) der Gießmaschine (4) relativ zu dem Gießprodukt (40) umfasst.

4. Verfahren nach einem der vorhergehenden Ansprüche, **dadurch gekennzeichnet, dass** das mithilfe der Gießmaschine (4) erzeugte Gießprodukt (40) ein Metallstrang, insbesondere ein Stahlstrang, ist.

5. Verfahren nach einem der vorhergehenden Ansprüche, **dadurch gekennzeichnet, dass** das mithilfe der Walzstraße (6, 8) erzeugte Walzprodukt (42a, 42b) ein Metallband, insbesondere ein Stahlband, ist.

6. Verfahren nach einem der vorhergehenden Ansprüche, **dadurch gekennzeichnet, dass** die Gießwalzverbundanlage (2) eine endlos operierende Gießwalzverbundanlage ist, wobei das von der Gießwalzverbundanlage (2) erzeugte Walzprodukt (42a, 42b) ein Endloswalzprodukt, insbesondere ein Endlosmetallband, ist.

7. Verfahren nach einem der vorhergehenden Ansprüche, **dadurch gekennzeichnet, dass** das Walzprodukt (42a, 42 b) mithilfe eines Warmwalzprozesses erzeugt wird.

8. Verfahren nach einem der vorhergehenden Ansprüche, **dadurch gekennzeichnet, dass** von der Messeinheit (14) die Walzprodukteigenschaft, bezogen auf eine Laufrichtung (44) des Walzprodukts (42a, 42b) in der Gießwalzverbundanlage (2), hinter der Walzstraße (6, 8) erfasst wird.

9. Verfahren nach einem der vorhergehenden Ansprüche, **dadurch gekennzeichnet, dass** die Walzstraße (6) eine Grobwalzstraße ist und die Gießwalzverbundanlage (2) eine weitere Walzstraße (8) aufweist, wobei die weitere Walzstraße (8) eine Fertigwalzstraße ist und von der Messeinheit (14) die Walzprodukteigenschaft zwischen den beiden Walzstraßen (6, 8) erfasst wird.

10. Verfahren nach einem der vorhergehenden Ansprüche, **dadurch gekennzeichnet, dass** dem Regler (16) ein Sollwert der Walzprodukteigenschaft zugeführt wird und das vom Regler (16) erzeugte Steuersignal von einer Abweichung zwischen dem Sollwert der Walzprodukteigenschaft und deren Istwert abhängig ist, wobei der Istwert der Walzprodukteigenschaft vom Regler (16) unter Verwendung des Messsignals ermittelt wird.

11. Gießwalzverbundanlage (2) mit einer Gießmaschine (4) zum Erzeugen eines Gießprodukts (40) und einer Walzstraße (6, 8) zum Erzeugen eines Walzprodukts (42a, 42b) aus dem Gießprodukt,
mit einer Regeleinrichtung (12) für eine Gießwalzverbundanlage (2), aufweisend eine Messeinheit (14) sowie einen mit einer Gießmaschine (4) verbindbaren Regler (16),
wobei die Messeinheit (14) dazu eingerichtet ist, eine Walzprodukteigenschaft zu erfassen, ein von der Walzprodukteigenschaft abhängiges Messsignal zu erzeugen und das Messsignal an den Regler (16) zu übermitteln,
wobei die Messeinheit (14) dazu eingerichtet ist, als Walzprodukteigenschaft ein Temperaturprofil des Walzprodukts (42a, 42b) in dessen Breitenrichtung zu erfassen, und der Regler (16) dazu eingerichtet ist, anhand eines Regelalgorithmus unter Verwendung des Messsignals ein Steuersignal für eine Kühleinrichtung (33, 37) der Gießmaschine (4) zu erzeugen,
wobei der Regler (16) mit der Gießmaschine (4) verbunden ist,
wobei die Gießmaschine (4) dazu eingerichtet ist, unter Verwendung des von dem Regler (16) bereitgestellten Steuersignals einen Kühlparameter der Gießmaschine (4) einzustellen,
wobei eine mit dem Regler (16) verbundene Bedieneinheit (20) vorhanden ist, mittels welcher dem Regler (16) ein Sollwert der Walzprodukteigenschaft vorgebbar ist.

12. Gießwalzverbundanlage (2) nach Anspruch 11,
**dadurch gekennzeichnet, dass** die Gießmaschine (4) eine Sekundärkühleinrichtung (37) mit einer oder mehreren positionsverstellbar gelagerten Kühldüsen (48) zum Aufspritzen eines Kühlmittels auf das Gießprodukt (40) sowie mindestens eine Verstelleinrichtung (52) zur Positionsverstellung der Kühldüse/-n (48) aufweist.

## Claims

1. Method for operating a combined casting/rolling installation (2) in which
- a casting machine (4) of the combined casting/rolling installation (2) is used to produce a cast product (40) and
- a rolling mill (6, 8) of the combined casting/rolling installation (2) is used to produce a rolled product (42a, 42b) from the cast product (40), wherein
- the combined casting/rolling installation (2) has a control device (12) with a measuring unit (14) and a controller (16),
- the measuring unit (14) detects a rolled-product property, generates a measurement signal dependent on the rolled-product property and transmits the measurement signal to the controller (16),
- the controller (16) uses the measurement signal to generate a control signal for the casting machine (4) on the basis of a control algorithm and transmits the control signal to the casting machine (4) and
- the casting machine (4) uses the control signal to set a casting parameter,
- wherein the rolled-product property that is detected by the measuring unit (14) is a temperature profile of the rolled product (42a, 42b) in the width direction thereof,
- wherein the casting parameter that is set by the casting machine (4) using the control signal is a cooling parameter of the casting machine (4), and
- wherein the said cooling parameter is a cooling parameter of a secondary cooling device (37) of the casting machine (4).

2. Method according to Claim 1,
**characterized in that** the cooling parameter of the casting machine (4) is a cooling power profile in the width direction (46) of the cast product (40).

3. Method according to one of the preceding claims,
**characterized in that** the setting of the cooling parameter comprises a setting of the position (s) of one or more cooling nozzles (48) of a secondary cooling device (37) of the casting machine (4) in relation to the cast product (40).

4. Method according to one of the preceding claims,
**characterized in that** the cast product (40) produced by means of the casting machine (4) is a metal strand, in particular a steel strand.

5. Method according to one of the preceding claims,
**characterized in that** the rolled product (42a, 42b) produced by means of the rolling mill (6, 8) is a metal strip, in particular a steel strip.

6. Method according to one of the preceding claims,
**characterized in that** the combined casting/rolling installation (2) is a continuously operating combined casting/rolling installation, wherein the rolled product (42a, 42b) produced by the combined casting/rolling installation (2) is a continuously rolled product, in particular a continuous metal strip.

7. Method according to one of the preceding claims,
**characterized in that** the rolled product (42a, 42b) is produced by means of a hot rolling process.

8. Method according to one of the preceding claims,
**characterized in that** the measuring unit (14) detects the rolled-product property downstream of the rolling mill (6, 8) with respect to a running direction (44) of the rolled product (42a, 42b) in the combined casting/rolling installation (2).

9. Method according to one of the preceding claims,
**characterized in that** the rolling mill (6) is a blooming mill and the combined casting/rolling installation (2) has a further rolling mill (8), wherein the further rolling mill (8) is a finishing mill and the measuring unit (14) detects the rolled-product property between the two rolling mills (6, 8).

10. Method according to one of the preceding claims,
**characterized in that** the controller (16) is fed a setpoint value of the rolled-product property and the control signal generated by the controller (16) is dependent on a deviation between the setpoint value of the rolled-product property and its actual value, wherein the actual value of the rolled-product property is determined by the controller (16) using the measurement signal.

11. Combined casting/rolling installation (2) with a casting machine (4) for producing a cast product (40) and a rolling mill (6, 8) for producing a rolled product (42a, 42b) from the cast product,
with a control device (12) for a combined casting/rolling installation (2), having a measuring unit (14) and a controller (16) that can be connected to a casting machine (4),
wherein the measuring unit (14) is designed to detect a rolled-product property, to generate a measurement signal dependent on the rolled-product property and to transmit the measurement signal to the controller (16),
wherein the measuring unit (14) is designed to detect as the rolled-product property a temperature profile of the rolled product (42a, 42b) in the width direction thereof, and the controller (16) is designed to use the measurement signal to generate a control signal for a cooling device (33, 37) of the casting machine (4) on the basis of a control algorithm,
wherein the controller (16) is connected to the casting machine (4),
wherein the casting machine (4) is designed to set a cooling parameter of the casting machine (4) using the control signal provided by the controller (16),
wherein there is an operator control unit (20), which is connected to the controller (16) and by means of which a setpoint value of the rolled-product property can be pre-set for the controller (16).

12. Combined casting/rolling installation (2) according to Claim 11,
**characterized in that** the casting machine (4) has a secondary cooling device (37) with one or more position-adjustably mounted cooling nozzles (48) for spraying a coolant onto the cast product (40) and at least one adjusting device (52) for the positional adjustment of the cooling nozzle(s) (48).

## Revendications

1. Procédé permettant de faire fonctionner une installation mixte de laminage et de coulée (2), selon lequel
- un produit coulé (40) est produit à l'aide d'une machine de coulée (4) de l'installation mixte de laminage et de coulée (2) et
- un produit laminé (42a, 42b) est produit à partir du produit coulé (40) à l'aide d'un train de laminage (6, 8) de l'installation mixte de laminage et de coulée (2), dans lequel
- l'installation mixte de laminage et de coulée (2) comprend un dispositif de régulation (12) doté d'une unité de mesure (14) ainsi que d'un régulateur (16),
- une propriété de produit laminé est détectée par l'unité de mesure (14), un signal de mesure dépendant de la propriété de produit laminé est produit et le signal de mesure est transmis au régulateur (16),
- un signal de commande pour la machine de coulée (4) est produit par le régulateur (16) à l'aide d'un algorithme de régulation au moyen du signal de mesure et le signal de commande est transmis à la machine de coulée (4) et
- un paramètre de coulée est ajusté par la machine de coulée (4) au moyen du signal de commande,
- dans lequel la propriété de produit laminé qui est détectée par l'unité de mesure (14) est un profil de température du produit laminé (42a, 42b) dans le sens de sa largeur,
- dans lequel le paramètre de coulée qui est ajusté par la machine de coulée (4) au moyen du signal de commande est un paramètre de refroidissement de la machine de coulée (4), et
- dans lequel ledit paramètre de refroidissement est un paramètre de refroidissement d'un dispositif de refroidissement secondaire (37) de la machine de coulée (4).

2. Procédé selon la revendication 1,
**caractérisé en ce que** le paramètre de refroidissement de la machine de coulée (4) est un profil de puissance de refroidissement dans le sens de la largeur (46) du produit coulé (40).

3. Procédé selon l'une des revendications précédentes, **caractérisé en ce que** l'ajustement du paramètre de refroidissement comporte un ajustement de la ou des positions d'une ou de plusieurs buses de refroidissement (48) d'un dispositif de refroidissement secondaire (37) de la machine de coulée (4) par rapport au produit coulé (40).

4. Procédé selon l'une des revendications précédentes, **caractérisé en ce que** le produit coulé (40) produit à l'aide de la machine de coulée (4) est un lingot métallique, en particulier un lingot d'acier.

5. Procédé selon l'une des revendications précédentes, **caractérisé en ce que** le produit laminé (42a, 42b) produit à l'aide du train de laminage (6, 8) est une bande métallique, en particulier une bande d'acier.

6. Procédé selon l'une des revendications précédentes, **caractérisé en ce que** l'installation mixte de laminage et de coulée (2) est une installation mixte de laminage et de coulée fonctionnant en continu, dans lequel le produit laminé (42a, 42b) produit par l'installation mixte de laminage et de coulée (2) est un produit laminé continu, en particulier une bande métallique continue.

7. Procédé selon l'une des revendications précédentes, **caractérisé en ce que** le produit laminé (42a, 42b) est produit à l'aide d'un processus de laminage à chaud.

8. Procédé selon l'une des revendications précédentes, **caractérisé en ce que** la propriété de produit laminé est détectée par l'unité de mesure (14) après le train de laminage (6, 8), par rapport à un sens de déplacement (44) du produit laminé (42a, 42b) dans l'installation mixte de laminage et de coulée (2).

9. Procédé selon l'une des revendications précédentes, **caractérisé en ce que** le train de laminage (6) est un train de laminage grossier et l'installation mixte de laminage et de coulée (2) comprend un autre train de laminage (8), dans lequel l'autre train de laminage (8) est un train de laminage de finition et la propriété de produit laminé est détectée par l'unité de mesure (14) entre les deux trains de laminage (6, 8).

10. Procédé selon l'une des revendications précédentes, **caractérisé en ce qu'**une valeur théorique de la propriété de produit laminé est introduite dans le régulateur (16) et le signal de commande produit par le régulateur (16) est dépendant d'un écart entre la valeur théorique de la propriété de produit laminé et sa valeur réelle, dans lequel la valeur réelle de la propriété de produit laminé est déterminée par le régulateur (16) au moyen du signal de mesure.

11. Installation mixte de laminage et de coulée (2) dotée d'une machine de coulée (4) pour la production d'un produit coulé (40) et d'un train de laminage (6, 8) pour la production d'un produit laminé (42a, 42b) à partir du produit coulé,
dotée d'un dispositif de régulation (12) pour une installation mixte de laminage et de coulée (2), comprenant une unité de mesure (14) ainsi qu'un régulateur (16) pouvant être relié à une machine de coulée (4),
dans laquelle l'unité de mesure (14) est conçue pour détecter une propriété de produit laminé, pour produire un signal de mesure dépendant de la propriété de produit laminé et pour transmettre le signal de mesure au régulateur (16),
dans laquelle l'unité de mesure (14) est conçue pour détecter en tant que propriété de produit laminé un profil de température du produit laminé (42a, 42b) dans le sens de sa largeur, et le régulateur (16) est conçu pour produire, à l'aide d'un algorithme de régulation au moyen du signal de mesure, un signal de commande pour un dispositif de refroidissement (33, 37) de la machine de coulée (4),
dans laquelle le régulateur (16) est relié à la machine de coulée (4),
dans laquelle la machine de coulée (4) est conçue pour ajuster un paramètre de refroidissement de la machine de coulée (4) au moyen du signal de commande fourni par le régulateur (16),
dans laquelle est disponible une unité de commande (20) reliée au régulateur (16), au moyen de laquelle une valeur théorique de la propriété de produit laminé peut être prédéfinie pour le régulateur (16).

12. Installation mixte de laminage et de coulée (2) selon la revendication 11,
**caractérisée en ce que** la machine de coulée (4) comprend un dispositif de refroidissement secondaire (37) doté d'une ou de plusieurs buses de refroidissement (48) montées de manière réglable en position pour la pulvérisation d'un liquide de refroidissement sur le produit coulé (40) ainsi qu'au moins un dispositif de réglage (52) pour le réglage en position de la ou des buses de refroidissement (48).
